**Europäisches Patentamt**

(19) **European Patent Office**

**Office européen des brevets**

(11) Numéro de publication: **0 033 556**
**B1**

(12) # FASCICULE DE BREVET EUROPEEN

(45) Date de publication du fascicule du brevet:
**01.02.84**

(51) Int. Cl.³: **C 03 B 9/06**

(21) Numéro de dépôt: **81200047.9**

(22) Date de dépôt: **16.01.81**

(54) Procédé de fabrication d'une bouteille isolante et bouteille ainsi obtenue.

(30) Priorité: **01.02.80 BE 199225**

(43) Date de publication de la demande:
**12.08.81 Bulletin 81/32**

(45) Mention de la délivrance du brevet:
**01.02.84 Bulletin 84/5**

(84) Etats contractants désignés:
**AT CH DE FR GB IT LI LU NL SE**

(56) Documents cités:
**DE - C - 468 523**

(73) Titulaire: **Bhide, Vasudeo Ramchandra, 209 E Sion, Bombay 22 (IN)**

(72) Inventeur: **Bhide, Vasudeo Ramchandra, 209 E Sion, Bombay 22 (IN)**

(74) Mandataire: **Pirson, Jean et al, c/o Bureau Gevers, S.A. rue de Livourne, 7 bte 1, B-1050 Brussels (BE)**

Procédé de fabrication d'une bouteille isolante et bouteille ainsi obtenue.

La présente invention est relative à un procédé de fabrication d'une bouteille isolante du type comportant une ampoule de verre à double paroi, intérieure et extérieure, ces parois étant séparées par un espace dans lequel règne le vide (voir DE-C-468 523).

Il existe actuellement deux types de procédés pour fabriquer les bouteilles isolées thermiquement par le vide, et plus particulièrement celles constituées par une ampoule ou un récipient isolant à double paroi délimitant un espace où a été créé le vide. Ces bouteilles protégées par une enveloppe plastique, métallique ou autre, servent à différents usages soit comme bouteille isolante transportable, soit comme canette ou cruche de table, soit comme porte-aliments, etc.

Le premier type de procédé pour fabriquer les bouteilles isolantes est le système de fabrication de bouteilles dites de deux pièces. Ce système est appelé ainsi parce que l'on part, en fait, de deux ampoules de verre, l'une intérieure et l'autre extérieure, qui sont soufflées et assemblées lors d'une phase ultérieure. L'inconvénient majeur de ce procédé, bien qu'autorisant une mécanisation poussée, est la perte de verre importante qu'il entraîne. En effet, dans le cas où les ampoules de verre sont soufflées par des machines automatiques, qui s'avèrent généralement extrêmement coûteuses, 40 à 70% en poids du verre soufflé sont perdus lors de la séparation de l'ampoule de la machine. Cette masse de verre inutilisée doit alors être renvoyée au four et être refondue, ce qui augmente sensiblement le coût de la fabrication. On enregistre également une perte de verre importante lors du coupage des ampoules avant leur assemblage, et lors de leur processus d'assemblage. De plus, l'assemblage ou le soudage de l'ampoule intérieure dans l'ampoule extérieure implique l'utilisation de brûleurs à gaz-air-oxygène consommant une grande quantité d'énergie.

Dans le second type de procédé de fabrication de bouteilles isolantes, appelé système de fabrication de bouteilles dites d'une pièce, l'ampoule extérieure est soufflée comme dans le premier type de procédé, soit à la bouche soit mécaniquement, la seconde ampoule étant obtenue au départ d'une masse de verre fondu amenée sur le col de l'ampoule extérieure, chauffé dans un four de réchauffage. Cette masse de verre, encore chaude, est poussée par des moyens mécaniques appropriés ou par gravité au travers du col de l'ampoule extérieure, de manière à former le col de l'ampoule intérieure, la future bouteille à double paroi étant ensuite transférée sur un dispositif qui amènera la masse de verre informe sous la forme d'une ampoule intérieure. Ce dispositif est constitué par un outil en rotation constante, pénétrant dans le col de la future ampoule intérieure, et s'ouvrant ensuite en continuant toujours à tourner et en pénétrant de plus en plus profondément dans la bouteille, l'ouverture de l'outil combinée à sa rotation et au déplacement de la bouteille de bas en haut formant l'ampoule intérieure. Bien que ce système présente l'avantage de permettre la fabrication d'une grande variété d'ampoules intérieures, de formes et de dimensions différentes, il présente le gros inconvénient de nécessiter une main-d'oeuvre nombreuse et qualifiée et une faible production horaire. En effet, le positionnement de la masse de verre, servant à la fabrication de l'ampoule intérieure, sur le col de l'ampoule extérieure, ne peut être effectué que par des spécialistes en la matière. Il est donc pratiquement impossible d'entièrement automatiser ce procédé, le coût des ampoules produites selon ce procédé s'avérant sensiblement plus élevé que le système de fabrication de bouteilles de deux pièces.

La présente invention a pour but de remédier à ces inconvénients et de prévoir un procédé de fabrication d'une bouteille isolante comportant une paroi intérieure et une paroi extérieure délimitant entre elles une enceinte ou un espace où le vide est fait, extrêmement simple à réaliser, n'entraînant que des pertes minimales de verre au cours du processus de fabrication, entièrement automatisable, bon marché et qui autorise une production horaire nettement plus élevée que le système de fabrication de bouteilles d'une pièce dont question ci-dessus.

A cet effet, suivant l'invention, on prévoit une ampoule extérieure pourvue d'un col et d'un trou d'évacuation d'air, constituant la paroi extérieure de l'ampoule à double paroi, on prévoit une pièce de verre préformée, creuse à sa partie supérieure et pleine à sa partie inférieure, utilisable comme ampoule intérieure, on chauffe le col de l'ampoule extérieure, on introduit la pièce de verre préformée au moins partiellement dans l'ampoule extérieure par son col, de telle sorte que la partie pleine de la pièce préformée soit à l'intérieur de l'ampoule extérieure, on fixe la partie supérieure de la pièce préformée au col de l'ampoule extérieure, et on amène la pièce de verre préformée sous la forme d'une ampoule intérieure, constituant la paroi intérieure de l'ampoule à double paroi.

Suivant une forme de réalisation préférentielle de l'invention, le diamètre de la partie supérieure de la pièce de verre préformée est sensiblement égal au diamètre du col de l'ampoule extérieure.

Suivant une première forme de réalisation de l'invention, l'on introduit complètement la pièce de verre préformée dans l'ampoule extérieure de telle sorte que la partie supérieure de la pièce préformée soit sensiblement au même niveau que l'extrémité soit sensiblement au même niveau que l'extrémité supérieure du col de l'ampoule extérieure.

Suivant une première forme de réalisation particulièrement avantageuse de l'invention, la partie supérieure de la pièce préformée est constituée d'un rebord annulaire dont le diamètre extérieur correspond au diamètre de l'extrémité supérieure du col de l'ampoule extérieure.

Suivant une seconde forme de réalisation de l'invention, l'on introduit partiellement la pièce de verre préformée dans l'ampoule extérieure, de telle sorte que la partie supérieure de la pièce préformée dépasse de l'extrémité supérieure du col de l'ampoule extérieure.

Suivant une seconde forme de réalisation particulièrement avantageuse de l'invention, la partie supérieure de la pièce de verre préformée est constituée d'un rebord annulaire dont le diamètre extérieur correspond au diamètre de l'extrémité supérieure du col de l'ampoule extérieure, et d'un segment annulaire d'un diamètre sensiblement égal au diamètre du col de l'ampoule extérieure, le rebord annulaire adjacent au segment annulaire, agencé entre ce dernier et la partie inférieure creuse, étant disposé sensiblement au même niveau que l'extrémité supérieure du col de l'ampoule extérieure de telle sorte que le segment annulaire dépasse du col de l'ampoule extérieure.

L'invention se rapporte également aux bouteilles isolantes, avec ou sans revêtement protecteur, bouchon de fermeture et gobelet, obtenues par le procédé susmentionné.

D'autres détails et particularités de l'invention ressortiront de la description de deux formes de réalisation d'un procédé de fabrication d'une bouteille isolante, donnée ci-après à titre d'exemple non limitatif et avec référence aux dessins annexés.

La figure 1 est une vue en élévation et en coupe axiale, avec brisures partielles, d'une bouteille isolante obtenue suivant une première forme de réalisation du procédé de l'invention, montrant la phase où la pièce de verre préformée est fixée à l'ampoule extérieure.

La figure 2 représente la bouteille de la figure 1, prise à un stade ultérieur, montrant la phase où la pièce de verre préformée est sous la forme d'une ampoule intérieure.

La figure 3 est une vue en élévation et en coupe axiale, avec brisures partielles, d'une bouteille isolante suivant une seconde forme de réalisation du procédé de l'invention, montrant la phase où la pièce de verre préformée est fixée à l'ampoule extérieure.

La figure 4 représente la bouteille de la figure 3, prise à un stade ultérieur, montrant la phase où la pièce de verre préformée est sous la forme d'une ampoule intérieure.

Dans les différentes figures, les mêmes notations de référence désignent des éléments identiques.

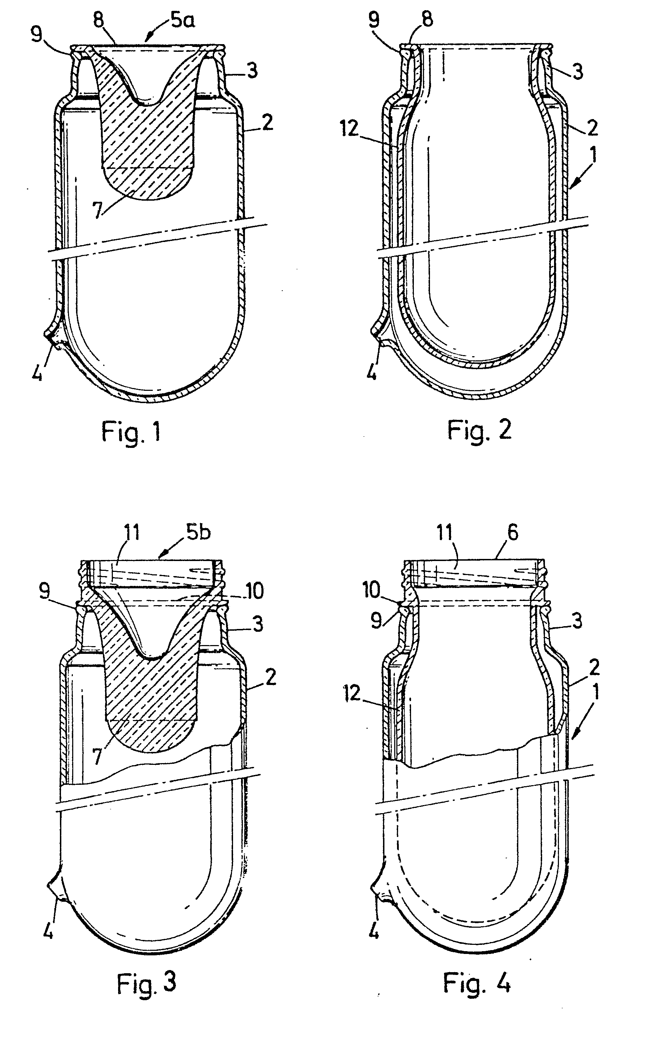

On prévoit, suivant l'invention, une ampoule 2 pourvue d'un col 3 et d'un trou d'évacuation d'air 4, auquel on soudera ultérieurement un queusot, cette ampoule 2 servant en fait à former la paroi extérieure de la bouteille isolante à double paroi 1. L'ampoule 2 obtenue soit par un soufflage à la bouche soit par un soufflage mécanique, est, dans le cas du soufflage manuel, séparée de la canne de soufflage, ou bien, dans le cas du soufflage mécanique, enlevée de la machine à souffler. Le trou 4 est pratiqué de préférence à la base de l'ampoule pour la pose du queusot, de manière à permettre à l'air de s'échapper lors de la formation de l'ampoule intérieure, d'introduire ultérieurement le miroitage et ensuite de faire le vide. L'ampoule extérieure 2 ainsi obtenue, peut être soit travaillée immédiatement, soit être recuite pour être stockée, en vue des phases de transformation ultérieures du procédé de l'invention. Pour le travail de l'ampoule 2, on chauffe le col de celle-ci à la température appropriée, et on y fixe ensuite, à titre d'ampoule intérieure, une pièce de verre préformée 5a ou 5b, ayant la forme d'un corps de révolution, creuse à sa partie supérieure et pleine à sa partie inférieure 7. La partie supérieure de la pièce de verre préformée ou du corps de révolution 5a est constituée d'un rebord annulaire 8 dont le diamètre extérieure correspond au diamètre de l'extrémité supérieure 9 du col 3 de l'ampoule 2, ainsi qu'on peut le voir plus particulièrement sur la figure 1 des dessins annexés, tandis que la partie supérieure de la pièce de verre préformée ou du corps de révolution 5b est constituée d'un rebord annulaire 10 dont le diamètre extérieur correspond au diamètre de l'extrémité supérieure 9 du col 3 de l'ampoule 2, et d'un segment annulaire 11 également du même diamètre que celui du col 3 de l'ampoule extérieure 2, comme on peut le voir sur la figure 3 des dessins annexés. On notera également, à cet effet, que la pièce de verre préformée 5a est fixée à l'ampoule 2, en l'y introduisant par son col 3, de telle sorte que son rebord annulaire 8 soit pratiquement au même niveau que l'extrémité supérieure 9 du col 3 de l'ampoule 2. La pièce de verre préformée 5b n'est, quant à elle, introduite que partiellement dans l'ampoule extérieure 2, le rebord 10 et le segment annulaire 11 dépassant de l'extrémité supérieure 9 du col 3 de l'ampoule extérieure. La pièce de verre préformée 5a ou 5b est alors amenée sous la forme d'une ampoule intérieure 12, comme on peut le voir sur les figures 2 et 4 des dessins annexés, cette ampoule intérieure 12 constituant en fait la paroi intérieure de la bouteille ou ampoule à double paroi 1. La pièce de verre préformée 5a ou 5b est amenée à l'état d'ampoule, grâce à un traitement thermique et à des moyens mécaniques appropriés, en employant notamment l'outil utilisé dans le cadre du système de fabrication de bouteilles d'une pièce dont question ci-dessus, pour amener la masse de verre fondu informe sur le col de l'ampoule extérieure à l'état d'ampoule intérieure. Cet outil, en rotation constante, pénètre dans la partie pleine 7 de la pièce de verre préformée 5a ou 5b, disposée à l'intérieur de l'ampoule extérieure 2, et ensuite s'ouvre en continuant toujours à tourner et en pénétrant de plus en plus profondément dans la bouteille. Comme dans le cas du système connu, l'ouverture de l'outil, combiné à sa rotation et au déplacement de la bouteille de bas en haut forme l'ampoule intérieure 12.

Comme on peut le voir sur les figures 3 et 4, la pièce de verre préformée 5b présente sur la surface extérieure de son segment annulaire 11, des filets de manière à pouvoir y visser un bouchon de fermeture. On pourrait concevoir, bien entendu, des pièces de verre préformées 5b pourvues, par exemple, de filets intérieurs et/ou d'un bec verseur. La pièce de verre préformée 5b, une fois sous la forme d'ampoule intérieure 12, peut être travaillée de telle sorte que la surface du bord supérieur 6 du segment annulaire 11 soit complètement plane, ce qui autorise une meilleure fixation du bouchon de fermeture.

Les pièces de verre 5a et 5b sont faites d'une seule pièce et peuvent être obtenues par les opérations de traitement suivantes, bien connues des spécialistes de la technique: pressage, soufflage; aspiration, soufflage; pressage, pressage; et aspiration, pressage et soufflage.

Lorsque l'on est arrivé au stade du procédé de l'invention tel que représenté par les figures 2 et 4, c'est-à-dire au moment où la pièce de verre préformée 5a ou 5b est sous la forme de l'ampoule intérieure 12, on soude un tube queusot au trou 4, ensuite on introduit par le queusot la solution du miroitage telle que, par exemple, du nitrate d'argent, de manière à argenter la paroi extérieure de l'ampoule intérieure et la paroi intérieure de l'ampoule extérieure, on fait le vide d'air par le queusot, et on scelle celui-ci.

Ainsi qu'on l'a déjà mentionné précédemment, les avantages conférés par le procédé de l'invention comparativement aux procédés existants sont multiples:
— le procédé peut être réalisé en continu, c'est-à-dire qu'il peut être entièrement automatisé, aucune main d'œuvre qualifiée n'étant donc nécessaire;
— on peut séparer totalement le processus de soufflage de l'ampoule extérieure de la formation de l'ampoule intérieure;
— on peut fabriquer simultanément une grande variété d'ampoules intérieures de grandeur et de forme différentes, au départ d'une même pièce;
— très faible consommation d'énergie. C'est ainsi que le chauffage du col de l'ampoule extérieure ne nécessite qu'un ou deux brûleurs à gaz, tandis que le système de fabrication des bouteilles d'une seule pièce nécessite l'utilisation d'un petit four de réchauffage pour cette opération, qui demande une grosse quantité de chaleur (fusion totale du col);
— grâce à la présence de la pièce de verre préformée, il est possible de réaliser une variété considérable de modèles originaux: filets à l'intérieur ou à l'extérieur du goulot, possibilités de réaliser des becs verseurs comme sur les pichets, etc.;
— economie considérable de verre comme indiqué précédemment, lors du soufflage mécanique des ampoules aussi bien intérieures qu'extérieures, de 40 à 70% en poids de verre soufflé sont perdus lors de la séparation des ampoules de la machine. Dans le cas du procédé de l'invention, si l'ampoule extérieure est soufflée automatiquement, on réalise une économie de verre, et donc d'énergie de l'ordre de 25 à 30%;
— l'ampoule intérieure est meilleure que dans le cas du système des bouteilles d'une pièce parce que la quantité de verre prélevée est toujours constante et préformée.

**Revendications**

1. Procédé de fabrication d'une bouteille isolante (1) du type comportant une ampoule (2, 12) de verre à double paroi, intérieure (12) et extérieure (2), ces parois étant séparées par un espace dans lequel règne le vide, caractérisé en ce qu'il consiste à prévoir une ampoule extérieure (2) pourvue d'un col (3) et d'un trou d'évacuation d'air (4), constituant la paroi extérieure de l'ampoule à double paroi, à prévoir une pièce de verre préformée (5a, 5b), creuse à sa partie supérieure et pleine à sa partie inférieure (7), utilisable comme ampoule intérieure (12), à chauffer le col (3) de l'ampoule extérieure (2), à introduire la pièce de verre préformée (5a, 5b) au moins partiellement dans l'ampoule extérieure (2) par son col, de telle sorte que la partie pleine (7) de la pièce préformée (5a, 5b) soit à l'intérieur de l'ampoule extérieure (2), à fixer la partie supérieure de la pièce préformée au col (3) de l'ampoule extérieure (2), et à amener la pièce de verre préformée (5a, 5b) sous la forme d'une ampoule intérieure (12), constituant la paroi intérieure de l'ampoule à double paroi.

2. Procédé suivant la revendication 1, caractérisé en ce que le diamètre de la partie supérieure de la pièce de verre préformée (5a, 5b) est sensiblement égal au diamètre du col (3) de l'ampoule extérieure (2).

3. Procédé suivant la revendication 2, caractérisé en ce que l'on introduit complètement la pièce de verre préformée (5a) dans l'ampoule extérieure (2) de telle sorte que la partie supérieure de la pièce préformée soit sensiblement au même niveau que l'extrémité supérieure (9) du col (3) de l'ampoule extérieure (2).

4. Procédé suivant la revendication 3, caractérisé en ce que la partie supérieure de la pièce préformée (5a) est constituée d'un rebord annulaire (8) dont le diamètre extérieur correspond au diamètre de l'extrémité supérieure (9) du col (3) de l'ampoule extérieure (2).

5. Procédé suivant la revendication 2, caractérisé en ce que l'on introduit partiellement la pièce de verre préformée (5b) dans l'ampoule extérieure (2), de telle sorte que la partie supérieure de la pièce préformée (5b) dépasse de l'extrémité supérieure (9) du col (3) de l'ampoule extérieure (2).

6. Procédé suivant la revendication 5, caractérisé en ce que la partie supérieure de la pièce de verre préformée (5b) est constituée d'un rebord annulaire (10) dont le diamètre extérieur correspond au diamètre de l'extrémité supérieure (9) du col (3) de l'ampoule extérieure (2), et d'un segment annulaire (11) d'un diamètre sensiblement égal au diamètre du col (3) de l'ampoule extérieure (2), le rebord annulaire (10) adjacent au segment annulaire (11), agencé entre ce dernier et la partie inférieure creuse, étant disposé sensiblement au même niveau que l'extrémité supérieure du col (3) de l'ampoule extérieure (2) de telle sorte que le segment annulaire (11) dépasse le col de l'ampoule extérieure.

7. Procédé suivant la revendication 6, caractérisé en ce que le segment annulaire (11) est pourvu de filets sur sa surface intérieure ou extérieure de manière à permettre d'y visser un bouchon de fermeture.

8. Procédé suivant l'une ou l'autre des revendications 6 et 7, caractérisé en ce que le segment annulaire (11) est pourvu d'un bec verseur.

9. Procédé suivant l'une quelconque des revendications 1 à 8, caractérisé en ce que la pièce de verre préformée (5a, 5b) est en verre pressé-soufflé, aspiré-soufflé, pressé-pressé ou aspiré-pressé-soufflé.

10. Procédé suivant l'une quelconque des revendications 6 à 9, caractérisé en ce que l'on rend la surface du bord supérieur (6) du segment annulaire (11) complètement plane.

11. Procédé suivant l'une quelconque des revendications 1 à 10, caractérisé en ce que l'ampoule extérieure (2) est obtenue par une opération de soufflage manuelle ou automatique.

12. Procédé suivant l'une quelconque des revendications 1 à 11, caractérisé en ce que la pièce de verre préformée (5a, 5b) est amenée sous la forme d'une ampoule intérieure (12) au moyen d'un chauffage et d'un traitement mécanique appropriés.

13. Procédé suivant l'une quelconque des revendications 1 à 12, caractérisé en ce que l'on soude un tube queusot au trou d'évacuation d'air (4), on recouvre les parois intérieure de l'ampoule extérieure (2) et extérieure de l'ampoule intérieure (12) d'une pellicule de miroitage et ensuite on fait le vide dans l'espace situé entre les dites parois.

14. Procédé suivant l'une quelconque des revendications 1 à 13, caractérisé en ce qu'il est réalisé en continu.

15. Bouteille isolante telle qu'obtenue par le procédé suivant l'une quelconque des revendications 1 à 14.

**Patentansprüche**

1. Verfahren zur Herstellung einer Isolierflasche (1) des Typs, der einen gläsernen Hohlkörper (2, 12) mit einer doppelten Wandung beinhaltet, und zwar eine innere (12) und eine äußere (2), wobei diese Wandungen durch einen Zwischenraum getrennt sind, in dem ein Vakuum herrscht, dadurch gekennzeichnet, daß man einen, einen Hals (3) sowie eine Öffnung (4) zum Evakuieren der Luft aufweisenden Hohlkörper (2) vorsieht, welcher die äußere Wandung des zweiwandigen Hohlkörpers bildet, daß man ferner ein vorgeformtes Glasteil (5a, 5b) vorsieht, welches in seinem oberen Abschnitt ausgehöhlt und in seinem unteren Abschnitt (7) voll und als innerer Hohlkörper (12) benutzbar ist, daß man den Hals (3) des äußeren Hohlkörpers (2) erhitzt, daß man das vorgeformte Glasteil (5a, 5b) wenigstens teilweise durch den Hals des äußeren Hohlkörpers (2) einführt, derart, daß der volle Abschnitt (7) des vorgeformten Teils (5a, 5b) sich im Inneren des äußeren Hohlkörpers (2) befindet, daß man den oberen Abschnitt des vorgeformten Teils am Hals (3) des äußeren Hohlkörpers (2) befestigt, und daß man das vorgeformte Glasteil (5a, 5b) in die Form des inneren Hohlkörpers (12) bringt, der die innere Wandung des doppelwandigen Hohlkörpers bildet.

2. Verfahren nach Anspruch 1, dadurch gekennzeichnet, daß der Durchmesser des oberen Abschnitts des vorgeformten Glasteils (5a, 5b) im wesentlichen so groß wie der Durchmesser des Halses des äußeren Hohlkörpers ist.

3. Verfahren nach Anspruch 2, dadurch gekennzeichnet, daß man das vorgeformte Glasteil (5) vollständig in den äußeren Hohlkörper (2) einführt, derart, daß der obere Abschnitt des vorgeformten Teils im wesentlichen auf derselben Höhe ist, wie das obere Ende (9) des Halses (3) des äußeren Hohlkörpers (2).

4. Verfahren nach Anspruch 3, dadurch gekennzeichnet, daß der obere Abschnitt des vorgeformten Teils (5a) aus einen ringförmigen, nach außen umgebogenen Rand (8) besteht, dessen äußerer Durchmesser dem Durchmesser des oberen Endes (9) des Halses (3) des äußeren Hohlkörpers (2) entspricht.

5. Verfahren nach Anspruch 2, dadurch gekennzeichnet, daß man das vorgeformte Glasteil teilweise in den äußeren Hohlkörper (2) derart einführt, daß der obere Abschnitt des vorgeformten Teils (5b) über das obere Ende (9) des Halses (3) des äußeren Hohlkörpers (2) hinausragt.

6. Verfahren nach Anspruch 5, dadurch gekennzeichnet, daß der obere Abschnitt des vorgeformten Glasteils (5b) aus einem ringförmigen, nach außen umgebogenen Rand (10) besteht, dessen Außendurchmesser dem Durchmesser des oberen Endes (9) des Halses (3) des äußeren Hohlkörpers (2) entspricht sowie aus einem ringförmigen Segment (11) besteht, dessen Durchmesser im wesentlichen demjenigen des Halses (3) des äußeren Hohlkörpers (2) entspricht, wobei der ringförmige, nach außen umgebogene Rand (10) neben dem ringförmigen Segment (11) und zwischen diesem und dem unteren ausgehöhlten Abschnitt angeordnet ist, und zwar im wesentlichen auf derselben Höhe wie der obere Rand des Halses (3) des äußeren Hohlkörpers (2), derart, daß das ringförmige Segment (11) den Hals des äußeren Hohlkörpers überragt.

7. Verfahren nach Anspruch 6, dadurch gekennzeichnet, daß zum Einschrauben eines Verschlußstopfens das ringförmige Segment (11) auf seiner inneren oder äußeren Oberfläche mit einem Gewinde versehen ist.

8. Verfahren nach Anspruch 6 oder 7, dadurch gekennzeichnet, daß das ringförmige Segment (11) mit einer Ausgußtülle versehen ist.

9. Verfahren nach einem der Ansprüche 1 bis 8, dadurch gekennzeichnet, daß das vorgeformte Glasteil (5a, 5b) aus preßgeblasenem, sauggeblasenem, preßgepreßtem oder saugpreßgeblasenem Glas besteht.

10. Verfahren nach einem der Ansprüche 6 bis 9, dadurch gekennzeichnet, daß man die Oberfläche des oberen Randes (6) des ringförmigen Segments (11) vollkommen plan macht.

11. Verfahren nach einem der Ansprüche 1 bis 10, dadurch gekennzeichnet, daß man den äußeren Hohlkörper (2) durch einen manuellen oder automatischen Blasvorgang erhält.

12. Verfahren nach einem der Ansprüche 1 bis 11, dadurch gekennzeichnet, daß das vorgeformte Glasteil (5a, 5b) in die Form eines inneren Hohlkörpers (12) mittels Erhitzung und einer geeigneten mechanischen Behandlung gebracht wird.

13. Verfahren nach einem der Ansprüche 1 bis 12, dadurch gekennzeichnet, daß man einen Saugstutzen an die Öffnung (4) zum Evakuieren der Luft anschmelzt, daß man die innere Wandung des äußeren Hohlkörpers (2) und die äußere Wandung des inneren Hohlkörpers (12) mit einer verspiegelnden Schicht bedeckt und dann das Vakuum in dem Raum zwischen diesen Wandungen herstellt.

14. Verfahren nach einem der Ansprüche 1 bis 13, dadurch gekennzeichnet, daß es kontinuierlich durchgeführt wird.

15. Isolierflasche hergestellt mit dem Verfahren nach einem der Ansprüche 1 bis 14.

## Claims

1. Method for manufacturing a vacuum flask (1) of the type comprising a glass bulb (2, 12) with twin walls, an inner wall (12) and an outer one (2), said walls being separated by a space in which prevails a vacuum, characterized in that it comprises providing an outer bulb (2) fitted with a neck (3) and an air-discharge hole (4), comprising the outer wall of the twin-walled bulb, providing a preshaped glass part (5a, 5b) which is hollow at the top thereof and solide at the bottom thereof (7), usuable as inner bulb (12), heating the neck (3) of the outer bulb (2), entering partly at least the preshaped glass part (5a, 5b) into the outer bulb (2) through the neck thereof, in such a way that the solid portion (7) from the preshaped part (5a, 5b) lie inside the outer bulb (2), securing the top portion of the preshaped part to the neck (3) of the outer bulb (2), and bringing the preshaped glass part (5a, 5b) in the shape of an inner bulb (12) which comprises the inner wall of the twinwalled bulb.

2. Method according to the claim 1, characterized in that the diameter of the top portion of the preshaped glass part (5a, 5b) is substantially equal to the diameter of the neck (3) of the outer bulb (2).

3. Method according to the claim 2, characterized in that one enters completely the preshaped glass part (5a) into the outer bulb (2) in such a way that the top portion of the preshaped part lie substantially at the same level as the top end (9) of the neck (3) of the outer bulb (2).

4. Method according to the claim 3, characterized in that the top portion of the preshaped part (5a) is comprised of a ring-shaped ridge (8) the outer diameter of which corresponds to the diameter of the top end (9) of the neck (3) of the outer bulb (2).

5. Method according to the claim 2, characterized in that one enters partly the preshaped glass part (5b) into the outer bulb (2) in such a way that the top portion of the preshaped part (5b) projects from the top end (9) of the neck (3) of the outer bulb (2).

6. Method according to the claim 5, characterized in that the top portion of the preshaped glass part (5b) is comprised of a ring-shaped ridge (10) the outer diameter of which corresponds to the diameter of the top end (9) of the neck (3) of the outer bulb (2), and a ring-like segment (11) with a diameter substantially equal to the diameter of the neck (3) of the outer bulb (2), the ring-shaped ridge (10) adjacent to the ring-like segment (11) arranged between this latter one and the hollow bottom portion, being arranged substantially at the same level as the top end of the neck (3) of the outer bulb (2), in sich a way that the ring-like segment (11) projects from the neck of the outer bulb.

7. Method according to the claim 6, characterized in that the ring-like segment (11) is provided with screw-threads on the inner or outer surface thereof in such a way as to enable screwing thereon a closing cap.

8. Method according to either one of claims 6 and 7, characterized in that the ring-like segment (11) is provided with a spout.

9. Method according to any one of claims 1 to 8, characterized in that the preshaped glass part (5a, 5b) is made from pressed-blown, sucked-blown, pressed-pressed, or sucked-pressed-blown glass.

10. Method according to any one of claims 6 to 9, characterized in that one makes the surface of the top edge (6) of the ring-like segment (11) completely plane.

11. Method according to any one of claims 1 to 10, characterized in that the outer bulb (2) is obtained by a manual or automatic blowing operation.

12. Method according to any one of claims 1 to 11, characterized in that the preshaped glass part (5a, 5b) is brought to the shape of an inner bulb (12) by means of a suitable heating and mechanical treatment.

13. Method according to any one of claims 1 to 12, characterized in that one welds an exhaust tube to the air-discharge hole (4), one covers the inner wall of the outer bulb (2) and the outer wall of the inner bulb (12) with a mirroring film, and then a vacuum is made in the space located between said walls.

14. Method according to any one of claims 1 to 13, characterized in that it is performed continuously.

15. Vacuum flask as obtained with the method according to any one of claims 1 to 14.

Fig. 1

Fig. 2

Fig. 3

Fig. 4